(19) **Europäisches Patentamt**

**European Patent Office**

**Office européen des brevets**

(11) **EP 4 343 925 A1**

(12) # EUROPEAN PATENT APPLICATION
published in accordance with Art. 153(4) EPC

(43) Date of publication:
**27.03.2024 Bulletin 2024/13**

(21) Application number: **21946409.6**

(22) Date of filing: **24.06.2021**

(51) International Patent Classification (IPC):
**H01M 10/615** *(2014.01)*  **H01M 10/625** *(2014.01)*
**H01M 10/633** *(2014.01)*  **H01M 10/635** *(2014.01)*
**H01M 10/48** *(2006.01)*  **B60L 58/24** *(2019.01)*
**B60L 58/27** *(2019.01)*

(52) Cooperative Patent Classification (CPC):
**B60L 58/24; B60L 58/27; H01M 10/48;
H01M 10/615; H01M 10/625; H01M 10/633;
H01M 10/635;** Y02E 60/10

(86) International application number:
**PCT/CN2021/101952**

(87) International publication number:
**WO 2022/266912 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
 • **YANG, Song
  Shenzhen, Guangdong 518129 (CN)**

 • **LIAO, Junhua
  Shenzhen, Guangdong 518129 (CN)**
 • **YANG, Kai
  Shenzhen, Guangdong 518129 (CN)**
 • **LI, Zhen
  Shenzhen, Guangdong 518129 (CN)**

(74) Representative: **Maiwald GmbH
Engineering
Elisenhof
Elisenstrasse 3
80335 München (DE)**

(54) **BATTERY HEATING METHOD AND HEATING APPARATUS**

(57)    This application provides a method for heating a battery and an apparatus for heating a battery. The method for heating a battery includes: determining, based on a battery temperature of a vehicle, an ambient temperature, and a meteorological temperature model, a wakeup moment that is before the battery temperature is lower than a first preset temperature threshold, where the meteorological temperature model describes a relationship in which an ambient temperature changes with moments; and controlling, at the wakeup moment, to heat the battery. Based on the method provided in this application, the battery can be heated when the battery temperature is about to be lower than the first preset temperature threshold, to reduce a quantity of vehicle wakeup times while a battery failure is avoided, thereby reducing heating power consumption of the battery.

FIG. 1a

Processed by Luminess, 75001 PARIS (FR)

EP 4 343 925 A1

## Description

### TECHNICAL FIELD

This application relates to the battery heating field, and specifically, to a method and an apparatus for heating a battery of an electric vehicle.

### BACKGROUND

Because a battery may be short-circuited in a cold environment, a battery manufacturer usually marks a lowest temperature at which the battery can normally charging or discharging. When the environmental temperature at which the battery is located is lower than the lowest temperature, a battery management system limits an output power of the battery, to avoid a short circuit of the battery. However, such an operation may cause a vehicle cannot perform some driving operations.

To avoid that the battery's temperature is lower than the lowest temperature in the cold environment, the vehicle is usually kept in a power-on state, and a battery temperature is detected in real time. When the battery is lower than a preset temperature, the battery is heated; or a power-off vehicle is periodically woken up, and the battery temperature is detected during wakeup, and when the battery is lower than a preset temperature, the battery is heated.

In the foregoing manner of heating a battery, power consumption is high, the vehicle needs to be frequently woken up, and an optimal temperature that the battery is enabled to reach cannot be obtained, resulting in poor user experience.

Therefore, how to heat the battery in a manner of low power consumption, a small quantity of vehicle wakeup times, and the optimal temperature that the battery is enabled to reach becomes a problem to be urgently resolved in the industry.

### SUMMARY

To reduce a quantity of vehicle wakeup times, and to heat a battery in a more energy-efficient manner, this application provides a method for heating a battery and an apparatus for heating a battery.

According to a first aspect of this application, a method for heating a battery is provided, including: determining, based on a battery temperature of a vehicle, an ambient temperature, and a meteorological temperature model, a wakeup moment that is before the battery temperature is lower than a first preset temperature threshold, where the meteorological temperature model describes a relationship in which an ambient temperature changes with time; and controlling, at the wakeup moment, to heat the battery.

Based on the foregoing settings, before the battery temperature is lower than the first preset temperature threshold, the battery is controlled to be heated, so that a quantity of vehicle wakeup times is reduced while a battery failure is avoided, and power consumption of the battery is reduced.

In a possible implementation, the determining, based on a battery temperature of a vehicle, an ambient temperature, and a meteorological temperature model, a wakeup moment that is before the battery temperature is lower than a first preset temperature threshold includes: setting a plurality of sub-moments from a power-off moment of the vehicle; determining ambient temperatures at the plurality of sub-moments based on an ambient temperature at the power-off moment of the vehicle and the meteorological temperature model; determining battery temperatures at the plurality of sub-moments based on a battery temperature at the power-off moment of the vehicle and the ambient temperatures at the plurality of sub-moments; and using, as the wakeup moment, a sub-moment that is before a corresponding sub-moment used when the battery temperature is lower than the first preset temperature threshold.

Based on the foregoing settings, a moment before the battery temperature is lower than the first preset temperature threshold can be relatively accurately determined, thereby avoiding a battery failure and improving user experience.

In a possible implementation, the controlling, at the wakeup moment, to heat the battery includes: when the battery temperature at the wakeup moment is lower than the first preset temperature threshold and greater than a second preset temperature threshold, determining, based on the battery temperature at the wakeup moment, the ambient temperature at the wakeup moment, and the meteorological temperature model, a target temperature that the battery is enabled to reach after the battery is heated; and heating the battery until the battery reaches the target temperature.

Based on the foregoing settings, when the battery temperature at the wakeup moment is lower than the first preset temperature threshold and greater than the second preset temperature threshold, it indicates that the battery is about to fail, and the battery needs to be immediately heated.

In a possible implementation, after the battery reaches the target temperature, powering off the vehicle is controlled.

In a possible implementation, the determining, based on the battery temperature at the wakeup moment, the ambient temperature at the wakeup moment, and the meteorological temperature model, a target temperature that the battery is enabled to reach after the battery is heated includes: determining a temperature difference between a current battery temperature and the battery temperature at the wakeup moment; when the temperature difference is lower than a preset temperature difference, determining, based on the current battery temperature, a current ambient temperature, and the meteorological temperature model, a failure moment at which the battery temperature is lower than the second preset temperature threshold, where the second preset temperature threshold is lower than the first preset temperature threshold; and when the failure moment is earlier than a threshold moment, increasing the current battery temperature by a first temperature, where the threshold moment is a moment after first duration after the power-off moment of the vehicle.

Based on the foregoing settings, the target temperature that is to be reached by the battery can be accurately determined at a speed of performing increasing by the first temperature at a time, so that the battery temperature remains above the failure temperature before the threshold moment, thereby reducing a quantity of wakeup times, avoiding an excessively high target temperature that is to be reached by the battery, and reducing heating power consumption of the battery.

In a possible implementation, when the temperature difference is greater than the preset temperature difference, the current battery temperature is used as the target temperature that the battery is enabled to reach after the battery is heated.

Based on the foregoing settings, on a premise of reducing a quantity of wakeup times, an excessively high target temperature to be reached by the battery is avoided, heating power consumption is reduced, and user experience is improved.

In a possible implementation, when the failure moment is later than the threshold moment, the current battery temperature is used as the target temperature that the battery is enabled to reach after the battery is heated.

Based on the foregoing settings, when the battery is at the target temperature and the failure moment of the battery is later than the threshold moment, performing increasing by the first temperature is stopped, to avoid an excessively high target temperature of the battery, and reduce heating power consumption of the battery.

In a possible implementation, the controlling, at the wakeup moment, to heat the battery includes: obtaining the battery temperature at the wakeup moment; and when the battery temperature at the wakeup moment is lower than a third preset temperature threshold, heating the battery in a first mode; or when the battery temperature at the wakeup moment is greater than the third preset temperature threshold, heating the battery in a second mode, where a heating power of the battery in the first mode is greater than that in the second mode.

Based on the foregoing settings, a heating mode with a low heating power can be used when the battery temperature at the wakeup moment is relatively high, thereby reducing heating power consumption; and a heating mode with a high heating power can be used when the battery temperature at the wakeup moment is relatively low, thereby increasing a heating speed and avoiding a battery failure.

In a possible implementation, the meteorological temperature model includes an offline preset meteorological temperature model and an online meteorological temperature model. The offline preset meteorological temperature model is established based on meteorological temperature data of a month in which the average ambient temperature is lower than a preset ambient temperature. The online meteorological temperature model is established based on meteorological temperature data predicted in a meteorological forecast.

Based on the foregoing settings, it is ensured that the failure moment at which the battery is lower than the first preset temperature threshold can also be determined in a case of a network disconnection, and the battery is heated at the moment, thereby avoiding a failure of the battery in a low-temperature environment.

According to a second aspect of this application, an apparatus for heating a battery is provided, including: a determining module, configured to determine, based on a battery temperature of a vehicle, an ambient temperature, and a meteorological temperature model, a wakeup moment that is before the battery temperature is lower than a first preset temperature threshold, where the meteorological temperature model describes a relationship in which an ambient temperature changes with time; and a control module, configured to control, at the wakeup moment, to heat the battery.

In a possible implementation, the determining module is specifically configured to: set a plurality of sub-moments from a power-off moment of the vehicle; determine ambient temperatures at the plurality of sub-moments based on an ambient temperature at the power-off moment of the vehicle and the meteorological temperature model; determine battery temperatures at the plurality of sub-moments based on a battery temperature at the power-off moment of the vehicle and the ambient temperatures at the plurality of sub-moments; and use, as the wakeup moment, a sub-moment that is before a corresponding sub-moment used when the battery temperature is lower than the first preset temperature threshold.

In a possible implementation, the control module is specifically configured to: when the battery temperature at the wakeup moment is lower than the first preset temperature threshold and greater than a second preset temperature threshold, determine, based on the battery temperature at the wakeup moment, the ambient temperature at the wakeup moment, and the meteorological temperature model, a target temperature that the battery is enabled to reach after the battery is heated; and heat the battery until the battery reaches the target temperature.

In a possible implementation, the control module is further configured to: after the battery reaches the target temperature, control powering off the vehicle.

In a possible implementation, the control module is specifically configured to: determine a temperature difference between a current battery temperature and the battery temperature at the wakeup moment; when the temperature difference is lower than a preset temperature difference, determine, based on the current battery temperature, a current ambient temperature, and the meteorological temperature model, a failure moment at which the battery temperature is lower than the second preset temperature threshold, where the second preset temperature threshold is lower than the first preset temperature threshold; and when the failure moment is earlier than a threshold moment, increase the current battery temperature by a first temperature, where the threshold moment is a moment after first duration after the power-off moment of the vehicle.

In a possible implementation, the control module is specifically further configured to: when the temperature difference is greater than the preset temperature difference, use the current battery temperature as the target temperature that the battery is enabled to reach after the battery is heated.

In a possible implementation, the control module is specifically further configured to: when the failure moment is later than the threshold moment, use the current battery temperature as the target temperature that the battery is enabled to reach after the battery is heated.

In a possible implementation, the control module is specifically configured to: obtain the battery temperature at the wakeup moment; and when the battery temperature at the wakeup moment is lower than a third preset temperature threshold, heat the battery in a first mode; or when the battery temperature at the wakeup moment is greater than the third preset temperature threshold, heat the battery in a second mode, where a heating power of the battery in the first mode is greater than that in the second mode. In a possible implementation, the meteorological temperature model includes an offline preset meteorological temperature model and an online meteorological temperature model. The offline preset meteorological temperature model is established based on meteorological temperature data of a month in which an average ambient temperature is lower than a preset ambient temperature. The online meteorological temperature model is established based on meteorological temperature data predicted in a meteorological forecast.

A technical effect brought by any one of the second aspect or the possible implementations of the second aspect of this application is the same as a technical effect brought by any one of the first aspect or the possible implementations of the first aspect of this application. For brevity, details are not described herein again.

According to a third aspect of this application, an electronic device is provided, including a memory and a processor, where executable code is stored in the memory, and the processor executes the executable code, to implement the method for heating a battery provided in any one of the first aspect or the possible implementations of the first aspect of this application.

According to a fourth aspect of this application, a computer-readable storage medium is provided. Program instructions are stored in the computer-readable storage medium. When the program instructions are executed by a computer, the computer is enabled to perform the method for heating a battery provided in any one of the first aspect or the possible implementations of the first aspect of this application.

According to a fifth aspect of this application, a computer program product is provided. When the computer program product runs on a computing device, the computing device is enabled to perform the method for heating a battery provided in any one of the first aspect or the possible implementations of the first aspect of this application.

According to a sixth aspect of this application, a vehicle is provided, including the apparatus for heating a battery provided in the second aspect of this application and a battery pack.

It is clearer and easier to understand the foregoing and other aspects of the present invention in descriptions of the following (plurality of) embodiments.

## BRIEF DESCRIPTION OF DRAWINGS

The following further describes features of the present invention and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are shown. A combination of the features shown in the accompanying drawings is not intended to limit this application. In addition, in this specification, content referred to by same reference signs is also the same. The specific accompanying drawings are described as follows:

FIG. 1a is a flowchart of a method for heating a battery according to an embodiment of this application;
FIG. 1b to FIG. 1f are sub-flowcharts of a method for heating a battery according to an embodiment of this application;

FIG. 2a-1 and FIG. 2a-2 are a flowchart of a specific implementation of a method for heating a battery according to an embodiment of this application;

FIG. 2b is a sub-flowchart of a specific implementation of a method for heating a battery according to an embodiment of this application;

FIG. 3 is a schematic module diagram of an apparatus for heating a battery according to an embodiment of this application;

FIG. 4 is a schematic module diagram of a computing device according to an embodiment of this application; and

FIG. 5 to FIG. 8 are schematic diagrams of coordinates of an ambient temperature and time according to an embodiment of this application.

## DESCRIPTION OF EMBODIMENTS

In this specification and claims, the terms "first and second" or similar terms such as module A, module B, and module C are merely used to distinguish between similar objects, and do not represent a specific order of the objects. It may be understood that specific orders or sequences may be exchanged if permitted, so that the embodiments of this application described herein can be implemented in an order other than the order illustrated or described herein.

In the following descriptions, used reference numerals such as S 110 and S 120 that indicate steps do not necessarily indicate that the steps are to be performed in the order, and consecutive steps may be exchanged if allowed, or may be simultaneously performed.

The term "include" used in this specification and claims should not be construed as being limited to content listed below, and does not exclude other elements or steps. Therefore, it should be construed as specifying existence of a mentioned feature, whole, step, or component, but does not preclude existence or addition of one or more other features, wholes, steps, or components and groups thereof. Therefore, the expression "a device including an apparatus A and an apparatus B" should not be limited to a device including only the components A and B.

"One embodiment" or "an embodiment" mentioned in this specification means that a particular feature, structure, or characteristic described in combination with the embodiment is included in at least one embodiment of the present invention. Therefore, the terms "in one embodiment" or "in an embodiment" that appear in this specification do not necessarily indicate a same embodiment, but may indicate a same embodiment. In addition, in one or more embodiments, the particular features, structures, or characteristics can be combined in any proper manner, as will be clear from the present disclosure to a person of ordinary skill in the art.

A state of charge (State Of Charge, SOC) is a ratio of a quantity of available electricity to a nominal capacity of a battery, and is an important monitoring data of a battery management system. The battery management system can control a battery operating status based on a value of the SOC. The state of charge of the battery reflects a charge state of the battery.

A battery management system (Battery Management System, BMS) BMS is mainly used to monitor a parameter of a power battery of an electric vehicle in real time, diagnose a fault, estimate a state of charge, estimate driving mileage, perform short-circuit protection, monitor leakage, display an alarm, select a charging or discharging mode, and the like.

A thermal management system (Thermal Management System, TMS) is used to heat and cool a battery, and mainly includes a heater, a heat sink, and a controller.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall be used. In addition, the terms used in this specification are merely for the purpose of describing the embodiments of this application, but are not intended to limit this application.

Application scenario

A method for heating a battery provided in the embodiments of this application may be applied to an in-vehicle power battery or an in-vehicle battery. In an extremely cold environment in which an ambient temperature is lower than -20°C, affecting normal running of a vehicle is avoided due to a short circuit of the in-vehicle power battery or the in-vehicle battery.

## Embodiment 1

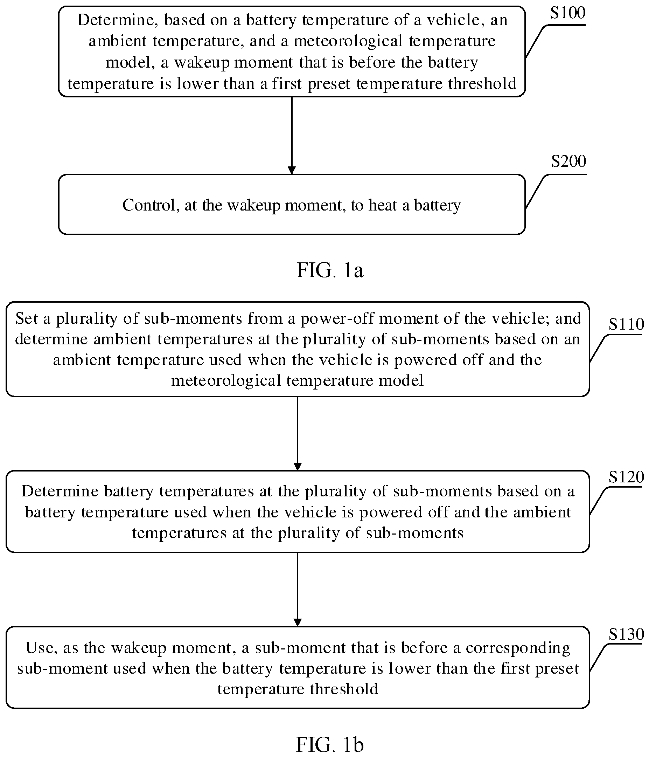

The following describes, with reference to FIG. 1a to FIG. 1f, a method for heating a battery provided in Embodiment 1 of this application.

The method for heating a battery in this embodiment of this application may be performed by a terminal, for example, a terminal such as a vehicle; or may be performed by an electronic apparatus applied in a vehicle, such as an electronic control unit (Electronic Control Unit, ECU), a system chip, and a general-purpose chip. The ECU may obtain and process data of a battery temperature and data of an ambient temperature that are collected by a temperature sensor, and output a corresponding control signal to a thermal management system, to control heating a battery.

FIG. 1a is a flowchart of a method for heating a battery according to an embodiment of this application. The method for heating a battery provided in this embodiment of this application includes the following steps.

Step S 100: Determine, based on a battery temperature of a vehicle, an ambient temperature, and a meteorological temperature model, a wakeup moment that is before the battery temperature is lower than a first preset temperature threshold.

The battery temperature and the ambient temperature may be periodically obtained by using a temperature sensor of a BMS. For example, the battery temperature and the ambient temperature may be collected every 10 to 30 minutes, or at even a shorter interval, for example, every one minute. After the vehicle is powered off, a battery temperature and an ambient temperature that are obtained for the last time before the vehicle is powered off may be used as a battery temperature and an ambient temperature that are used when the vehicle is powered off. The meteorological temperature model describes a relationship in which an ambient temperature changes with moments. The first preset temperature threshold may be -20°C to -35°C, and the first preset temperature threshold may be set based on a battery model. This is not limited in this application.

In some embodiments, the meteorological temperature model may include an offline preset meteorological temperature model and an online meteorological temperature model. The offline preset meteorological temperature model is established based on meteorological temperature data of a month in which an average ambient temperature is lower than a preset ambient temperature. The online meteorological temperature model is established based on meteorological temperature data predicted in a meteorological forecast.

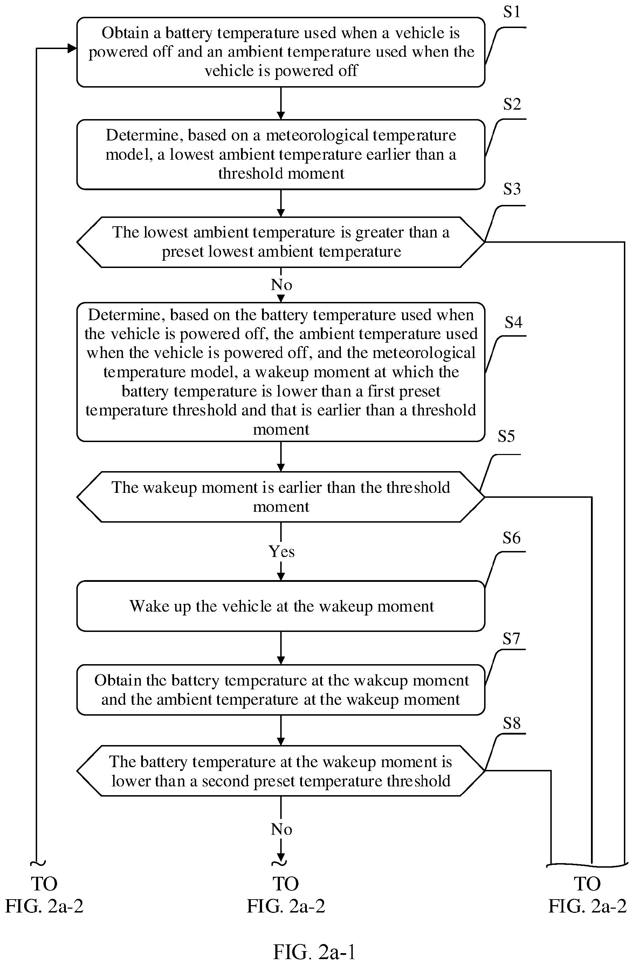

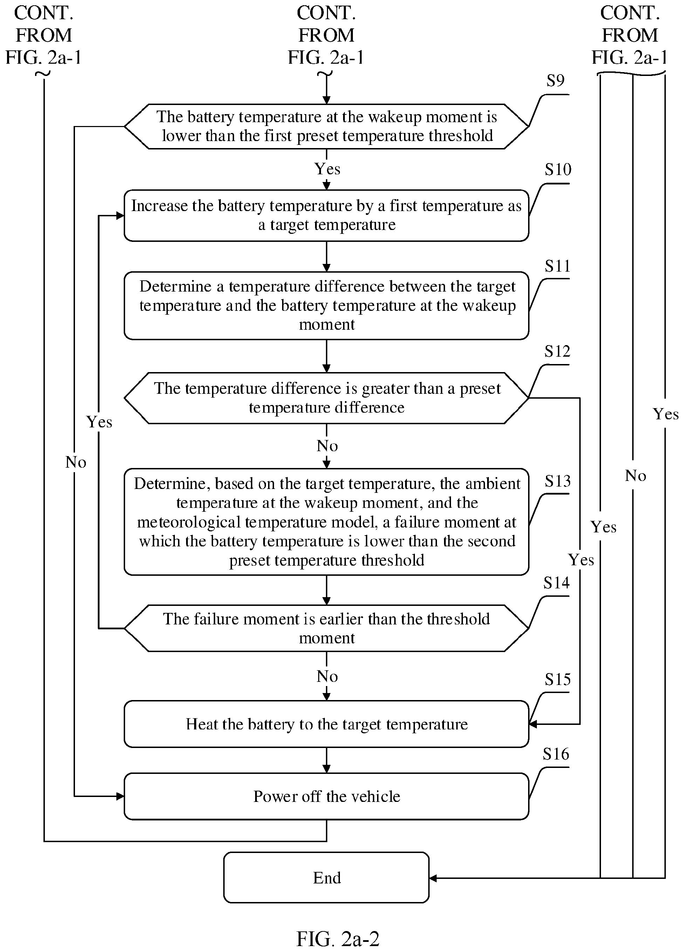

For descriptions of the meteorological temperature model, refer to descriptions in step S2 in Embodiment 2 shown in FIG. 2a-1 and FIG. 2a-2. For brevity, details are not described herein.

Step S200: Control, at the wakeup moment, to heat the battery.

When the vehicle is woken up, powering on only the BMS and a TMS of the vehicle may be controlled, and another component is powered off. After receiving a wakeup signal, the BMS may send a heating instruction to the TMS to heat the battery by using the TMS.

In some embodiments, as shown in FIG. 1b, step S100 may include the following substeps.

Step S 110: Set a plurality of sub-moments from a power-off moment of the vehicle; and determine ambient temperatures at the plurality of sub-moments based on an ambient temperature used when the vehicle is powered off and the meteorological temperature model.

In step S 110, when the power-off moment of the vehicle falls within a temperature rise area, duration from the power-off moment of the vehicle to an ending moment of the temperature rise area may be divided into a plurality of sub-moments, and a duration interval between two adjacent sub-moments is not longer than one hour. The ambient temperature used when the vehicle is powered off is known, and an ambient temperature at each sub-moment may be determined based on a temperature rise speed $\alpha$ that is of an ambient temperature and that is provided by the meteorological temperature model (as shown in Table 1 or Table 2).

When the power-off moment of the vehicle falls within a temperature fall area, duration from the power-off moment of the vehicle to an ending moment of the temperature fall area may be divided into a plurality of sub-moments, and a duration interval between two adjacent sub-moments is not longer than one hour. The ambient temperature used when the vehicle is powered off is known, and an ambient temperature at each sub-moment may be determined based on a temperature fall speed $\beta$ that is of an ambient temperature and that is provided by the meteorological temperature model (as shown in Table 1 or Table 2).

When the power-off moment of the vehicle falls within a constant temperature area, duration from the power-off moment of the vehicle to an ending moment of the constant temperature area may be divided into a plurality of sub-moments, and a duration interval between two adjacent sub-moments is not longer than one hour. The ambient temperature used when the vehicle is powered off is known, and it can be known based on the meteorological temperature model (as shown in Table 1 or Table 2) that the ambient temperature remains unchanged. In this case, an ambient temperature at each sub-moment may be determined.

In some embodiments, duration from the power-off moment of the vehicle to a threshold moment may be divided into a plurality of sub-moments, or duration from the power-off moment of the vehicle to any moment may be divided into a plurality of sub-moments.

Step S 120: Determine battery temperatures at the plurality of sub-moments based on a battery temperature used when the vehicle is powered off and the ambient temperatures at the plurality of sub-moments.

At any sub-moment, a temperature difference between an ambient temperature and a battery temperature determines a temperature fall speed of the battery, each temperature difference has a corresponding temperature fall speed of the battery, and the temperature fall speed may be obtained according to a calibration value comparison table provided by a battery manufacturer.

The ambient temperature used when the vehicle is powered off (at the power-off moment of the vehicle) and the battery temperature used when the vehicle is powered off (at the power-off moment of the vehicle) are known, and the temperature difference between the ambient temperature and the battery temperature used when the vehicle is powered off (at the power-off moment of the vehicle) may be obtained. A temperature fall speed of a battery temperature between a time point at which the vehicle is powered off (at a power-off moment of the vehicle) and a second specified sub-moment can be obtained according to the calibration value comparison table provided by the battery manufacturer. A battery temperature at a next sub-moment (the second specified sub-moment) may be obtained based on the battery temperature used when the vehicle is powered off (at the power-off moment of the vehicle) and a battery temperature fall speed. The ambient temperatures of the vehicle at all the sub-moments are known according to step S120, and in this case, a temperature difference between the ambient temperature and the battery temperature at the next sub-moment may be obtained. By analogy, a battery temperature at each sub-moment may be recursively obtained.

Step S130: Use, as the wakeup moment, a sub-moment that is before a corresponding sub-moment used when the battery temperature is lower than the first preset temperature threshold.

For example, when a recursively obtained battery temperature at a twelfth sub-moment is lower than the first preset temperature threshold, a recursively obtained eleventh sub-moment is used as the wakeup moment.

In some embodiments, as time passes and a temperature falls, a quantity of electricity of the battery becomes smaller. To avoid an excessively low state of charge of the battery, a threshold moment that is specific duration (also referred to as first duration in this application) after the power-off moment of the vehicle is usually set. When a sub-moment at which the recursively obtained battery temperature is lower than a second preset temperature threshold (the second preset temperature threshold is lower than the first preset temperature threshold) exceeds the threshold moment, the vehicle may not be woken up, and the battery is not heated.

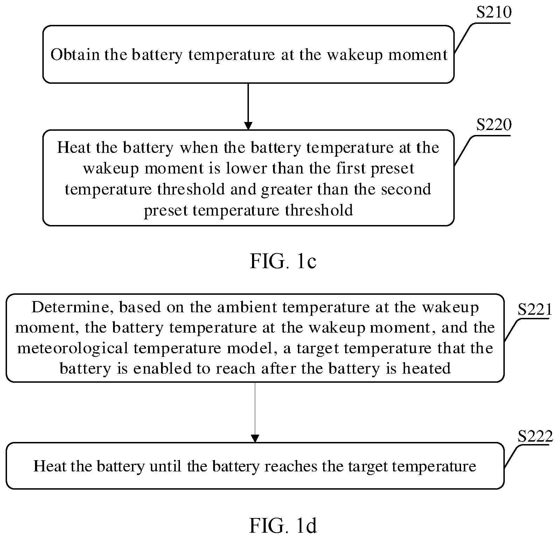

In some embodiments, as shown in FIG. 1c, step S200 may include the following substeps.

Step S210: Obtain a battery temperature at the wakeup moment.

The ambient temperature changes in real time, and the battery temperature also changes with the ambient temperature. Therefore, the battery temperature at the wakeup moment may be greater than or lower than a preset temperature threshold, and the battery temperature needs to be obtained again at the wakeup moment.

Step S220: Heat the battery when the battery temperature at the wakeup moment is lower than the first preset temperature threshold and greater than the second preset temperature threshold.

When the battery temperature is lower than the first preset temperature threshold and greater than the second preset temperature threshold, it indicates that the battery is about to fail. However, it can be ensured at a current temperature that the battery normally heats itself. When the battery temperature is greater than the first preset temperature threshold, it indicates that there is still a time period before the battery fails. To ensure that a state of charge of the battery is not excessively low, the battery does not need to be heated by itself by consuming a quantity of electricity of the battery. When the battery temperature is lower than the second preset temperature threshold, it indicates that the battery is failed. At the temperature, the battery cannot heat itself, and powering off the vehicle is controlled.

In some embodiments, as shown in FIG. 1d, step S220 may include the following substeps.

Step S221: Determine, based on the ambient temperature at the wakeup moment, the battery temperature at the wakeup moment, and the meteorological temperature model, a target temperature that the battery is enabled to reach after the battery is heated.

A temperature difference between the target temperature and the battery temperature at the wakeup moment is lower than a preset temperature difference. To avoid excessively high heating power consumption of the battery caused by repeatedly performing increasing by a first temperature, the preset temperature difference is set. When a temperature difference between a current battery temperature (a battery temperature obtained by performing increasing by the first temperature) and the battery temperature at the wakeup moment reaches the preset temperature difference, performing increasing by the first temperature is stopped, and the current battery temperature is used as the target temperature that the battery is enabled to reach.

Step S222: Heat the battery until the battery reaches the target temperature.

In some embodiments, after the battery is heated to the target temperature, powering off the vehicle is controlled.

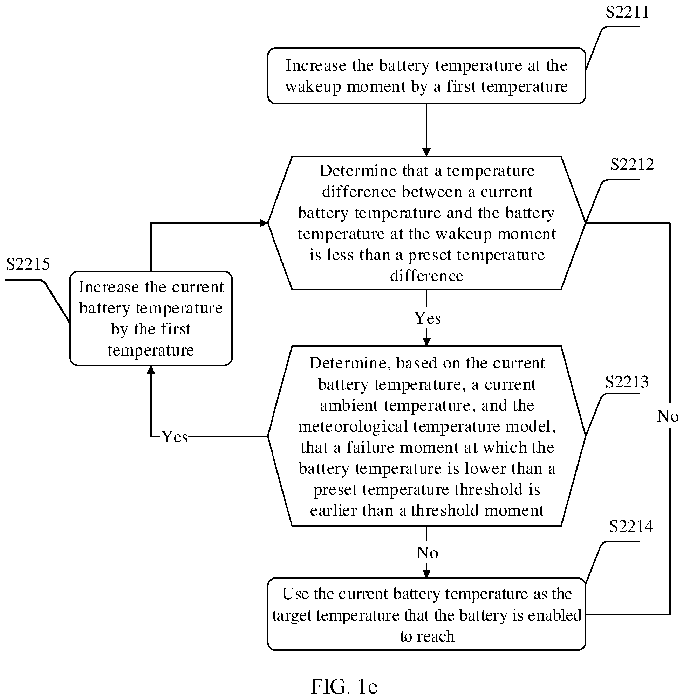

In some embodiments, as shown in FIG. 1e, step S221 may include the following sub steps.

Step S2211: Increase the battery temperature at the wakeup moment by the first temperature.

The first temperature may range from 0.5°C to 3°C. For example, the first temperature may be 1°C. In some embodiments, when the battery temperature $T_b$ at the wakeup moment is - 23°C, after the first temperature is increased by, the current battery temperature $T_p$ is -22°C.

Step S2212: Determine the temperature difference between the current battery temperature and the battery temperature at the wakeup moment.

For example, when the battery temperature $T_b$ at the wakeup moment is -23°C and the current battery temperature $T_p$ is -22°C, a temperature difference between the current battery temperature $T_p$ and the battery temperature $T_b$ at the wakeup moment is 1°C.

When the temperature difference is lower than the preset temperature difference, step S2213 is performed: determining, based on the current battery temperature, the ambient temperature at the wakeup moment, and the meteorological temperature model, a failure moment at which the battery temperature is lower than a preset temperature threshold.

A method for determining, by using the current battery temperature, the failure moment at which the battery temperature is lower than the preset temperature threshold is the same as the method in step S100. For brevity, details are not described herein again.

When the failure moment is later than the threshold moment, step S2214 is performed: using the current battery temperature as the target temperature that the battery is enabled to reach.

When the failure moment is later than the threshold moment, performing increasing by the first temperature is stopped, thereby avoiding excessively high heating power consumption of the battery.

When the failure moment is earlier than the threshold moment, step S2215 is performed: increasing the current battery temperature by the first temperature.

When the failure moment is earlier than the threshold moment, it indicates that after the battery is heated to the current battery temperature, the vehicle is woken up again before the threshold moment. To reduce a quantity of wakeup times and reduce power consumption of the battery, the current battery temperature is increased by the first temperature again.

After step S2215 is performed, step S2212 and step S2213 are performed again until a target temperature that is lower than the first preset temperature threshold and for which the failure moment is later than the threshold moment is determined.

In some embodiments, when the temperature difference is greater than the preset temperature difference, step S2215 is performed: using the current battery temperature as a target temperature that the battery is enabled to reach.

To avoid excessively high heating power consumption of the battery caused by repeatedly performing increasing by the first temperature, the preset temperature difference is set. When a temperature difference between a current battery temperature (a battery temperature obtained by performing increasing by the first temperature) and the battery temperature at the wakeup moment reaches the preset temperature difference, performing increasing by the first temperature is stopped, and the current battery temperature is used as the target temperature that the battery is enabled to reach.

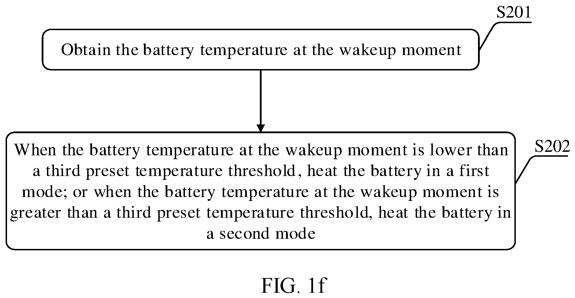

As shown in FIG. 1f, in some embodiments, step S200 may include the following sub steps.

Step S201: Obtain a battery temperature at the wakeup moment.

The ambient temperature changes in real time, and the battery temperature also changes with the ambient temperature. Therefore, the battery temperature at the wakeup moment may be greater than or lower than a preset temperature threshold, and the battery temperature needs to be obtained again at the wakeup moment.

Step S202: When the battery temperature at the wakeup moment is lower than a third preset temperature threshold, heat the battery in a first mode; or when the battery temperature at the wakeup moment is greater than a third preset temperature threshold, heat the battery in a second mode.

A heating power of the battery in the first mode is greater than that in the second mode. The third preset temperature threshold may fall between the first preset temperature threshold and the second preset temperature threshold, and the third preset temperature threshold may be lower than or equal to the preset temperature threshold.

When the battery temperature at the wakeup moment is lower than the third preset temperature threshold, it indicates that the battery temperature is excessively low, the battery is about to fail, and the battery temperature needs to be raised as soon as possible. Therefore, a heating mode with a relatively high power is used to increase a heating speed. When the battery temperature at the wakeup moment is greater than the third preset temperature threshold, it indicates that the battery does not fail excessively quickly, and a heating mode with a relatively low power may be used to heat the battery, thereby reducing heating power consumption of the battery.

Based on the foregoing settings, the heating mode with the low heating power can be used when the battery temperature at the wakeup moment is relatively high, thereby reducing heating power consumption; and the heating mode with the high heating power can be used when the battery temperature at the wakeup moment is relatively low, thereby increasing a heating speed and avoiding a battery failure.

**Embodiment 2**

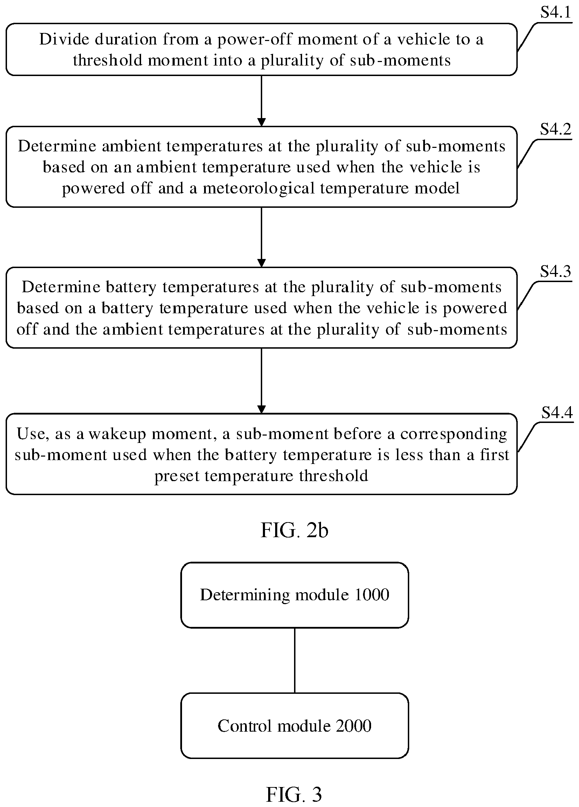

As shown in FIG. 2a-1, FIG. 2a-2, and FIG. 2b, the following describes a specific implementation of a method for heating a battery provided in the embodiment of this application.

FIG. 2a-1 and FIG. 2a-2 are a flowchart of the specific implementation of the method for heating a battery according to the embodiment of this application. As shown in FIG. 2a-1 and FIG. 2a-2, the method for heating a battery provided according to this embodiment of this application includes the following steps.

Step S1: Obtain a battery temperature used when a vehicle is powered off and an ambient temperature used when the vehicle is powered off.

The battery temperature and the ambient temperature may be periodically obtained by using a temperature sensor of a BMS. For example, the battery temperature and the ambient temperature may be collected every 10 to 30 minutes, or at even a shorter interval, for example, every one minute. When the vehicle is powered off, a battery temperature and an ambient temperature that are obtained for the last time before the vehicle is powered off are used as a battery temperature and an ambient temperature that are used when the vehicle is powered off.

Step S2: Determine, based on a meteorological temperature model, a lowest ambient temperature earlier than the threshold moment.

The threshold moment is a moment after preset duration after a power-off moment of the. A state of charge of a battery gradually falls as time passes. Therefore, to avoid an excessively low state of charge of the battery and impact on subsequent use of the vehicle, the threshold moment is set. For example, a moment after 72 hours after the vehicle is powered off is used as the threshold moment, or the preset duration may be set to be shorter or longer, such as 24 hours or 93 hours. When the threshold moment is exceeded, if the battery is heated by continuing using the state of charge of the battery, it is doubtless that subsequent use of the vehicle is affected. Therefore, the lowest ambient temperature before the threshold moment is determined based on the meteorological temperature model.

The meteorological temperature model describes a relationship in which an ambient temperature changes with time, and reflects ambient temperatures at different moments. The meteorological temperature model includes an offline preset meteorological temperature model and an online meteorological temperature model. The offline preset meteorological temperature model is established based on meteorological temperature data of a month in which an average ambient temperature is lower than a preset ambient temperature. The offline preset meteorological temperature model may be pre-stored in a memory. When the online meteorological temperature model cannot be obtained due to a network disconnection, a wakeup moment at which the battery temperature is lower than a first preset temperature may be determined by using the offline preset meteorological temperature model. The online meteorological temperature model is established based on meteorological temperature data predicted in a meteorological forecast. When the vehicle is connected to a network, the meteorological temperature model may be established by using online meteorological temperature data obtained when the vehicle is powered off. For the meteorological temperature data, refer to Table 1 and Table 2.

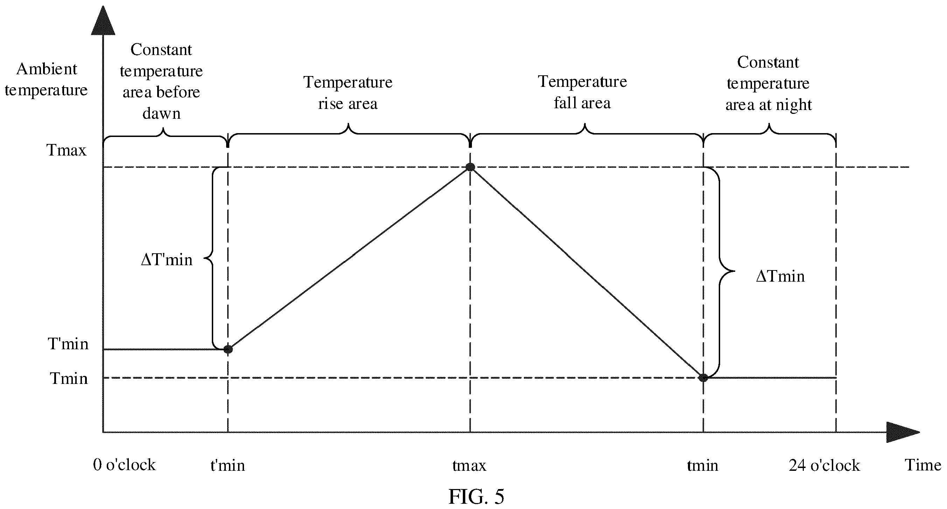

In some embodiments, the relationship in which an ambient temperature changes with time may be represented by using a schematic diagram of temperature-time coordinates shown in FIG. 5, a horizontal coordinate is time, and a vertical coordinate is an ambient temperature. It can be seen from FIG. 5 that, based on a trend in which the ambient temperature changes with the time, a day may be divided into different time segments: a constant temperature area before dawn, a temperature rise area, a temperature fall area, and a constant temperature area at night. The constant temperature area before dawn and the constant temperature area at night are consecutive. Therefore, during calculation, a day is divided into only three time segments: a constant temperature area, a temperature rise area, and a temperature fall area. In the constant temperature area, the ambient temperature changes within $\pm2°C$. For descriptions of related parameters in FIG. 5, refer to Table 1.

**Table 1**

| Parameter | Representation sign | Calculation method | Remarks |
|---|---|---|---|
| Constant temperature ending moment before dawn | $t_{min'}$ | Meteorologically predicted sunrise moment | |
| Temperature rise starting moment | | | |
| Temperature rise ending moment | $t_{max}$ | Meteorologically predicted highest temperature moment | |
| Temperature fall starting moment | | | |
| Temperature fall ending moment | $t_{min}$ | Lowest temperature starting moment meteorologically predicted | Change within $\pm2°C$ |
| Constant temperature starting moment at night | | | |

(continued)

| Parameter | Representation sign | Calculation method | Remarks |
|---|---|---|---|
| Constant temperature outside a vehicle before dawn | $T_{min'}$ | Meteorologically predicted lowest temperature before dawn | |
| Highest temperature outside the vehicle | $T_{max}$ | Meteorologically predicted highest temperature | |
| Constant temperature outside the vehicle at night | $T_{min}$ | Meteorologically predicted lowest temperature outside the vehicle at night | |
| Temperature rise speed | $\alpha$ | $(T_{max} - T_{min'})/(t_{max} - t_{min})$ | Represented by using a positive value |
| Temperature fall speed | $\beta$ | $(T_{max} - T_{min})/(t_{min} - t_{max})$ | |

In some embodiments, when the meteorological temperature model is the offline preset meteorological temperature model, the relationship in which an ambient temperature changes with moments is similar to that shown in FIG. 5. Related parameters in the offline preset meteorological temperature model and the parameters in the online meteorological temperature model are of a same variety, and only values of the parameters are different. For the parameters of the offline preset meteorological temperature model, refer to Table 2.

Table 2

| Parameter | Representation sign | Calculation method | Remarks |
|---|---|---|---|
| Constant temperature ending moment before dawn | $t_{min'}$ | Refer to sunrise moments in December and January (7 o'clock) | |
| Temperature rise starting moment | | | |
| Temperature rise ending moment | $t_{max}$ | Refer to moments (14 o'clock) of highest temperatures in December and January | |
| Temperature fall starting moment | | | |
| Temperature fall ending moment | $t_{min}$ | Refer to lowest temperature starting moments (21 o'clock) in December and January | It is flexible for the temperature fall starting moment and the constant temperature starting moment at night to be a maximum of 2°C greater than a lowest temperature. |
| Constant temperature starting moment at night | | | |
| Maximum temperature difference outside a vehicle before dawn | $\Delta T_{min'}$ | Refer to a minimum value (11°C) of a maximum temperature difference on a date on which a lowest temperature is lower than a temperature threshold | Ensure that a highest temperature is lower than an actual value, that is, a prediction time point is earlier than an actual time point |
| Maximum temperature difference outside the vehicle at night | $\Delta T_{min}$ | Refer to a maximum value (21°C) of the maximum temperature difference on the date on which the lowest temperature is lower than the temperature threshold | Ensure that the lowest temperature is lower than an actual value, that is, a prediction time point is earlier than an actual time point |

(continued)

| Parameter | Representation sign | Calculation method | Remarks |
|---|---|---|---|
| Temperature rise speed | $\alpha$ | $\Delta T_{min}/(t_{max} - t_{min'})$ | Represented by using a positive value |
| Temperature fall speed | $\beta$ | $\Delta T_{min}/(t_{min} - t_{max})$ | |

In some embodiments, for example, when the vehicle is powered off at 19 o'clock on January 3, 2020, a lowest ambient temperature that is reached by the ambient temperature before 19 o'clock on January 6, 2020 may be determined.

Step S3: Determine whether the lowest ambient temperature is greater than a preset lowest ambient temperature.

When the lowest ambient temperature is greater than the preset lowest ambient temperature, it indicates that even if the ambient temperature reaches the lowest ambient temperature, the battery does not fail. Therefore, the battery does not need to be heated, and the calculation ends. For example, when the vehicle is powered off at 19 o'clock on May 1 in the northern hemisphere, the ambient temperature is definitely not lower than 0°C before the threshold moment, and no subsequent step needs to be performed.

When the lowest ambient temperature is lower than the preset lowest ambient temperature, it indicates that when the ambient temperature reaches the lowest ambient temperature, the battery fails. Therefore, the battery needs to be heated. For example, when the vehicle is powered off at 19 o 'clock on January 1 in the northern hemisphere, it is determined, based on the meteorological temperature model before the threshold moment, that the ambient temperature is lower than -30°C before the threshold moment, and a subsequent step needs to be performed.

When the lowest ambient temperature is lower than the preset lowest ambient temperature, step S4 is performed: determining, based on the battery temperature used when the vehicle is powered off, the ambient temperature used when the vehicle is powered off, and the meteorological temperature model, a wakeup moment at which the battery temperature is lower than a first preset temperature threshold.

The battery may heat itself at a first preset temperature, and the first preset temperature threshold is greater than a failure temperature of the battery.

As shown in FIG. 2b, step S4 includes the following substeps.

Step S4.1: Divide duration from the power-off moment of the vehicle to the threshold moment into a plurality of sub-moments.

Duration intervals between two adjacent sub-moments may be the same or may be different, and the duration interval between two adjacent sub-moments is shorter than one hour.

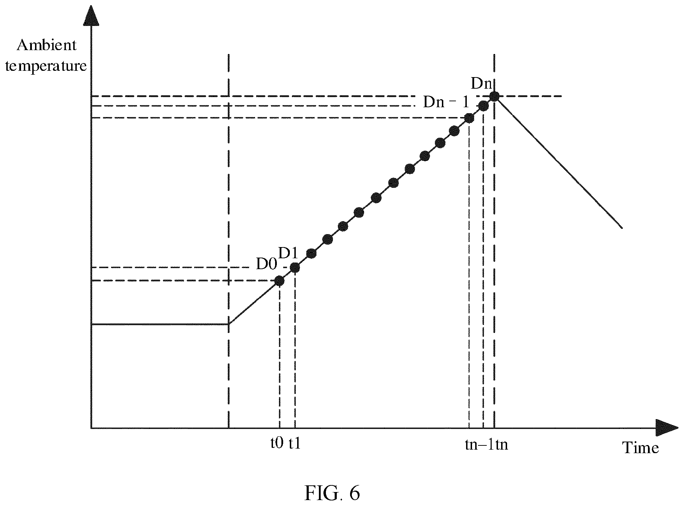

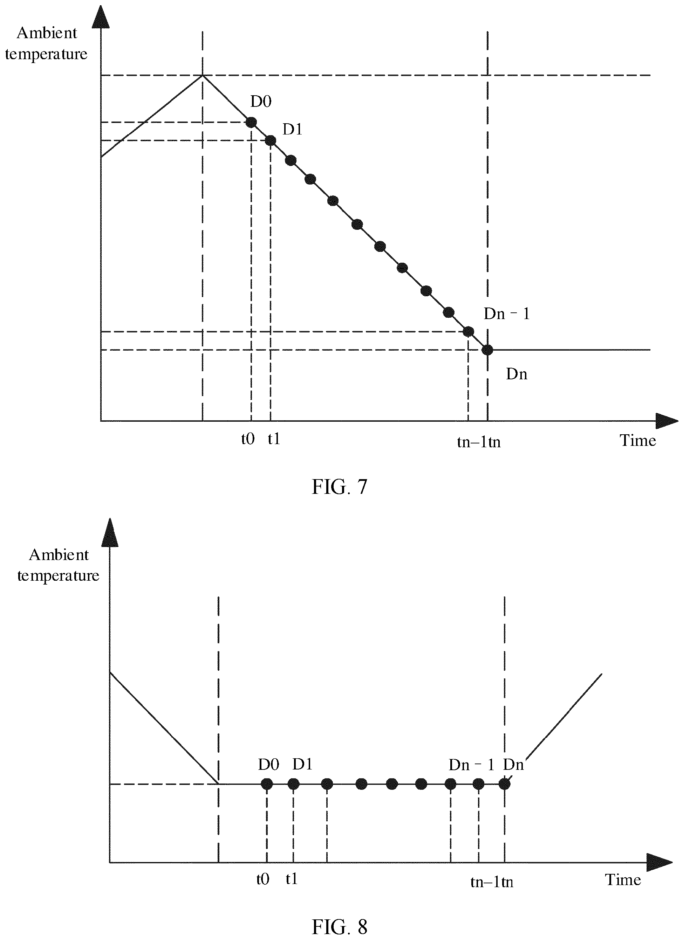

It can be learned from FIG. 5, Table 1, or Table 2 that one day includes three different time areas: a constant temperature area, a temperature rise area, and a temperature fall area. As shown in FIG. 6 to FIG. 8, each of the temperature rise area, the temperature fall area, and the constant temperature area may be divided into a plurality of sub-moments, or a plurality of sub-moments may be set between the power-off moment of the battery and the threshold moment. As shown in FIG. 6, a first sub-moment $t_0$ of the temperature rise area may be a power-off moment of the vehicle, a last sub-moment of the constant temperature area, or a temperature rise starting moment, to obtain $D_0$ to $D_n$, in other words, $n+1$ sub-moments in total. As shown in FIG. 7, a first sub-moment $t_0$ of the temperature fall area may be a power-off moment of the vehicle, a last sub-moment of the temperature rise area, or a temperature fall starting moment, to obtain $D_0$ to $D_n$, in other words, $n+1$ sub-moments in total. As shown in FIG. 8, a first sub-moment of the constant temperature area may be a power-off moment of the vehicle, a last sub-moment of the temperature fall area, or a constant temperature starting moment, to obtain $D_0$ to $D_n$, in other words, $n+1$ sub-moments in total.

Step S4.2: Determine ambient temperatures at the plurality of sub-moments based on the ambient temperature used when the vehicle is powered off and the meteorological temperature model.

When the power-off moment of the vehicle falls within the temperature rise area, assuming that an ambient temperature at an $i^{th}$ sub-moment is $T_e^i$,

$$T_e^i = T_e^0 - \alpha \times (t_i - t_0)... \text{ (Formula 1)},$$

where

$T_e^0$ is an ambient temperature at the first sub-moment, $\alpha$ is a temperature rise speed, $t_i$ is the $i^{th}$ sub-moment, and $t_0$ is the first sub-moment.

Because the ambient temperature of the vehicle at the power-off moment (or an ambient temperature at the last sub-moment of the constant temperature area) is known, ambient temperatures of the vehicle at all sub-moments may be sequentially obtained according to Formula 1.

When the power-off moment of the vehicle falls within the temperature fall area, assuming that an ambient temperature at an $i^{th}$ sub-moment is $T_e^i$,

$$T_e^i = T_e^0 - \beta \times (t_i - t_0)... \text{ (Formula 2)},$$

where

$T_e^0$ is an ambient temperature at the first sub-moment, $\beta$ is a temperature fall speed, $t_i$ is the $i^{th}$ sub-moment, and $t_0$ is the first sub-moment.

Because the ambient temperature of the vehicle at the power-off moment (or an ambient temperature at the last sub-moment of the temperature rise area) is known, ambient temperatures of the vehicle at all sub-moments may be sequentially obtained according to Formula 2.

When the power-off moment of the vehicle fall within the constant temperature area, assuming that an ambient temperature at an $i^{th}$ sub-moment is $T_e^i$,

$$T_e^i = T_e^0 ... \text{ (Formula 3)},$$

where

$T_e^0$ is an ambient temperature at the first sub-moment.

Because the ambient temperature of the vehicle at the power-off moment (or an ambient temperature at the last sub-moment of the temperature fall area) is known, ambient temperatures of the vehicle at all sub-moments may be sequentially obtained according to Formula 3.

Step S4.3: Determine battery temperatures at the plurality of sub-moments based on the battery temperature used when the vehicle is powered off and the ambient temperatures at the plurality of sub-moments.

When the power-off moment of the vehicle falls within the temperature rise area, assuming that a battery temperature at an $i^{th}$ sub-moment is $T_b^i$,

$$T_b^i = T_b^{i-1} - V_{i-1} \times (t_i - t_{i-1})... \text{ (Formula 4)},$$

where

$T_b^{i-1}$ is a battery temperature at an $(i-1)^{th}$ sub-moment, $V_{i-1}$ is a battery temperature fall speed, $t_i$ is the $i^{th}$ sub-moment, and $t_{i-1}$ is an $(i-1)^{th}$ sub-moment. The battery temperature fall speed is related to a temperature difference ($T_e^{i-1} - T_b^{i-1}$) between an ambient temperature at the moment and a battery temperature at the moment. Each temperature difference has a corresponding battery temperature fall speed, and the battery temperature fall speed may be obtained by using a calibration value provided by a battery manufacturer.

A battery temperature $T_b^0$ at a first sub-moment (that is, a battery temperature used when the vehicle is powered off or a battery temperature at the temperature rise area starting moment) is known, and an ambient temperature $T_e^0$ at the first sub-moment (that is, an ambient temperature used when the vehicle is powered off or an ambient temperature at the temperature rise area starting moment) is known from step S4.2. Therefore, a battery temperature fall speed $V_0$ from the first sub-moment $t_0$ to the second sub-moment $t_1$ may be calculated. Based on the battery temperature $T_b^0$ at the first sub-moment and the battery temperature fall speed $V_0$ from the first sub-moment $t_0$ to the second sub-moment $t_1$, according to Formula 4, a battery temperature $T_b^1$ at the second sub-moment may be calculated. By analogy, a battery temperature at the $i^{th}$ sub-moment may be recursively calculated.

When the power-off moment of the vehicle falls within the temperature fall area, assuming that a battery temperature at an $i^{th}$ sub-moment is $T_b^i$,

$$T_b^i = T_b^{i-1} - V_{i-1} \times (t_i - t_{i-1})... \text{ (Formula 5)},$$

where

$T_b^{i-1}$ is a battery temperature at an $(i-1)^{th}$ sub-moment, $V_{i-1}$ is a battery temperature fall speed, $t_i$ is the $i^{th}$ sub-moment, and $t_{i-1}$ is an $(i-1)^{th}$ sub-moment. The battery temperature fall speed is related to a temperature difference ($T_e^{i-1} - T_b^{i-1}$) between an ambient temperature at the moment and a battery temperature at the moment. Each temperature difference has a corresponding battery temperature fall speed, and the battery temperature fall speed may be obtained by using a calibration value provided by a battery manufacturer.

A battery temperature $T_b^0$ at a first sub-moment (that is, a battery temperature used when the vehicle is powered off or a battery temperature at the temperature fall area starting moment) is known, and an ambient temperature $T_e^0$ at the first sub-moment (that is, an ambient temperature used when the vehicle is powered off or an ambient temperature at the temperature fall area starting moment) is known in step S4.2. Therefore, a battery temperature fall speed $V_0$ from the first sub-moment $t_0$ to the second sub-moment $t_1$ may be calculated. Based on the battery temperature $T_b^0$ at the first sub-moment and the battery temperature fall speed $V_0$ from the first sub-moment $t_0$ to the second sub-moment $t_1$, according to Formula 5, a battery temperature $T_b^1$ at the second sub-moment may be calculated. By analogy, a battery temperature at the ith sub-moment may be recursively calculated.

When the power-off moment of the vehicle falls within the constant temperature area, assuming that a battery temperature at an ith sub-moment is $T_b^i$,

$$T_b^i = T_b^{i-1} - V_{i-1} \times (t_i - t_{i-1}) \ldots \text{(Formula 6),}$$

where

$T_b^{i-1}$ is a battery temperature at an (i-1)th sub-moment, $V_{i-1}$ is a battery temperature fall speed, $t_i$ is the ith sub-moment, and $t_{i-1}$ is an (i-1)th sub-moment. The battery temperature fall speed is related to a temperature difference ($T_e^{i-1} - T_b^{i-1}$) between an ambient temperature $T_e^{i-1}$ at the moment and a battery temperature $T_b^{i-1}$ at the moment. Each temperature difference has a corresponding battery temperature fall speed, and the battery temperature fall speed may be obtained by using a calibration value provided by a battery manufacturer.

A battery temperature $T_b^0$ at a first sub-moment (that is, a battery temperature used when the vehicle is powered off or a battery temperature at the constant temperature area starting moment) is known, and an ambient temperature $T_e^0$ at the first sub-moment (that is, an ambient temperature used when the vehicle is powered off or an ambient temperature at the constant temperature area starting moment) is known in step S4.2. Therefore, a battery temperature fall speed $V_0$ from the first sub-moment $t_0$ to the second sub-moment $t_1$ may be calculated. Based on the battery temperature $T_b^0$ at the first sub-moment and the battery temperature fall speed $V_0$ from the first sub-moment $t_0$ to the second sub-moment $t_1$, according to Formula 6, a battery temperature $T_b^1$ at the second sub-moment may be calculated. By analogy, a battery temperature at the ith sub-moment may be recursively calculated.

Step S4.4: Use, as the wakeup moment, a sub-moment that is before a corresponding sub-moment used when the battery temperature is lower than the first preset temperature threshold.

In the temperature rise area, when the recursively obtained battery temperature at the ith sub-moment is lower than or equal to the first preset temperature, the wakeup moment is set to the (i-1)th moment; or when a recursively obtained battery temperature at a last sub-moment is greater than a first preset temperature, the battery temperature at the last sub-moment (or the temperature fall area starting moment) and an ambient temperature are used as the battery temperature at the first sub-moment of the temperature fall area and the ambient temperature, and step S4.3 is performed.

In the temperature fall area, when the recursively obtained battery temperature at the ith sub-moment is lower than or equal to the first preset temperature, the wakeup moment is set to the (i-1)th moment; or in the temperature fall area, when the recursively obtained battery temperature at a last sub-moment is greater than a first preset temperature, the battery temperature at the last sub-moment (or the constant temperature area starting moment) and the ambient temperature are used as the battery temperature at the first sub-moment of the constant temperature area and the ambient temperature, and step S4.3 is performed.

In the constant temperature area, when the recursively obtained battery temperature at the ith sub-moment is lower than or equal to the first preset temperature, the wakeup moment is set to the (i-1)th moment; or in the constant temperature area, when the recursively obtained battery temperature at a last sub-moment is greater than a first preset temperature, the battery temperature at the last sub-moment (or the temperature rise area starting moment) and the ambient temperature are used as the battery temperature at the first sub-moment of the temperature rise area and the ambient temperature, and the wakeup moment of the battery in the temperature rise area is determined.

S5: Determine whether the wakeup moment is earlier than the threshold moment.

When the determined wakeup moment of the battery is later than the threshold moment, the wakeup moment is canceled and the calculation ends. Alternatively, when no moment at which the battery temperature is lower than the first preset temperature threshold is calculated from the power-off moment of the vehicle to the threshold moment, the calculation ends and waking up the vehicle is canceled.

When the determined wakeup moment of the battery is earlier than the threshold moment, step S6 is performed: wake up the vehicle at the wakeup moment, to partially power on the vehicle.

When the vehicle is woken up, the BMS and a TMS of the vehicle are powered on, and another component is powered off. After receiving a wakeup signal, the BMS sends a heating instruction to the TMS to heat the battery by using the TMS.

Step S7: Obtain the battery temperature at the wakeup moment and the ambient temperature at the wakeup moment.

The battery temperature and the ambient temperature may be obtained by using a temperature sensor of the BMS. The ambient temperature changes in real time, and the battery temperature also changes with the ambient temperature. Therefore, the battery temperature and the ambient temperature need to be obtained again at the wakeup moment.

Step S8: Determine whether the battery temperature at the wakeup moment is lower than a second preset temperature threshold.

The second preset temperature threshold is lower than the first preset temperature threshold and greater than or equal to the failure temperature of the battery. When the battery is lower than the second preset temperature threshold, the battery is about to fail or is failed. In this case, the battery cannot be used for heating again. In this case, the calculation ends, and the vehicle is powered off.

When the battery temperature at the wakeup moment is greater than the second preset temperature threshold, step S9 is performed: determining whether the battery temperature at the wakeup moment is lower than the first preset temperature threshold.

When the battery temperature at the wakeup moment is greater than the first preset temperature threshold, it indicates that the battery does not need to be heated. To reduce energy consumption of the battery, step S16 is performed: powering off the vehicle. After step S16 is performed, return to perform step S1 and the subsequent steps.

When the battery temperature at the wakeup moment is lower than the first preset temperature threshold, it indicates that the battery is about to fail, and the battery needs to be immediately heated.

At the wakeup moment, the battery management system BMS of the vehicle receives a heating instruction, the battery management system BMS and the thermal management system TMS are powered on, and the thermal management system is controlled to complete heating of the battery.

Heating the battery includes the following steps.

Step S10: Increase the battery temperature by a first temperature as a target temperature.

The battery temperature is represented by using $T_b$, and the target temperature is represented by using $T_p$. The first temperature may range from 0.5°C to 3°C. For example, the first temperature may be 1°C. In some embodiments, when the battery temperature $T_b$ at the wakeup moment is -23°C, the target temperature $T_p$ is -22°C.

Step S11: Determine a temperature difference between the target temperature and the battery temperature at the wakeup moment.

For example, when the battery temperature $T_b$ at the wakeup moment is -23°C, and the target temperature $T_p$ is -22°C, a temperature difference between the target temperature $T_p$ and the battery temperature $T_b$ at the wakeup moment is 1°C.

Step S12: Determine whether the temperature difference is greater than a preset temperature difference.

The preset temperature difference is used to reduce power consumption of the battery, to avoid excessively high heating power consumption of the battery caused by repeatedly performing increasing by the first temperature. When a temperature difference between a current battery temperature (a battery temperature obtained by performing increasing by the first temperature) and the battery temperature at the wakeup moment reaches the preset temperature difference, performing increasing by the first temperature is stopped, and the current battery temperature is used as the target temperature that the battery is enabled to reach.

In some embodiments, the preset temperature difference may range between 3°C and 6°C.

When the temperature difference is greater than the preset temperature difference, step S15 is performed: heating the battery to the target temperature.

When the temperature difference is lower than the preset temperature difference, step S13 is performed: determining, based on the target temperature, the meteorological temperature model, and the ambient temperature at the wakeup moment, a failure moment at which the battery temperature is lower than the second preset temperature threshold.

A method for determining, by using the battery temperature as the target temperature $T_p$, the failure moment at which the battery temperature is lower than the second preset temperature threshold is the same as the method described in step S4. For brevity, details are not described herein again.

Step S14: Determine whether the failure moment is earlier than the threshold moment.

When the failure moment is earlier than the threshold moment, return to perform step S10: increasing the target temperature $T_p$ (the battery temperature) by the first temperature. In some embodiments, when the failure moment is 15 hours after the power-off moment of the vehicle, $T_p$ is increased by 1°C, that is, $T_p$ is -23°C. After step S 10 is performed, step S11 and step S 12 are sequentially performed until the corresponding target temperature for which the failure moment is earlier than the threshold moment is determined.

When the failure moment is later than the threshold moment, step S15 is performed: heating the battery to the target temperature.

In some embodiments, when interval duration between the failure moment and the power-off moment of the vehicle is longer than 72 hours, the target temperature is used as a temperature that the battery is enabled to reach. When the battery temperature is heated to the target temperature, effectiveness of the battery before the threshold moment is ensured, a quantity of wakeup times is reduced as much as possible, and heating power consumption of the battery is reduced.

Step S 16: Power off the vehicle.

After the battery is heated to the target temperature, powering off the vehicle is controlled, and return to perform step S1 and subsequent steps of step S1.

**Embodiment 3**

FIG. 3 is a schematic module diagram of an apparatus for heating a battery according to an embodiment of this application. As shown in FIG. 3, the apparatus for heating a battery provided in this embodiment of this application includes a determining module 1000 and a control module 2000. The determining module 1000 is configured to determine, based on a battery temperature of a vehicle, an ambient temperature, and a meteorological temperature model, a wakeup moment that is before the battery temperature is lower than a first preset temperature threshold, where the meteorological temperature model describes a relationship in which an ambient temperature changes with time. The control module 2000 is configured to control, at the wakeup moment, to heat the battery.

In some embodiments, the determining module 1000 is specifically configured to: set a plurality of sub-moments from a power-off moment of the vehicle; determine ambient temperatures at the plurality of sub-moments based on an ambient temperature at the power-off moment of the vehicle and the meteorological temperature model; determine battery temperatures at the plurality of sub-moments based on a battery temperature at the power-off moment of the vehicle and the ambient temperatures at the plurality of sub-moments; and use, as the wakeup moment, a sub-moment that is before a corresponding sub-moment used when the battery temperature is lower than the first preset temperature threshold.

In some embodiments, the control module 2000 is specifically configured to: when the battery temperature at the wakeup moment is lower than the first preset temperature threshold and greater than a second preset temperature threshold, determine, based on the battery temperature at the wakeup moment, the ambient temperature at the wakeup moment, and the meteorological temperature model, a target temperature that the battery is enabled to reach after the battery is heated; and heat the battery until the battery reaches the target temperature.

In some embodiments, the control module 2000 is specifically configured to: determine a temperature difference between a current battery temperature and the battery temperature at the wakeup moment; when the temperature difference is lower than a preset temperature difference, determine, based on the current battery temperature, a current ambient temperature, and the meteorological temperature model, a failure moment at which the battery temperature is lower than the second preset temperature threshold, where the second preset temperature threshold is lower than the first preset temperature threshold; and when the failure moment is earlier than a threshold moment, increase the current battery temperature by a first temperature, where the threshold moment is a moment after first duration after the power-off moment of the vehicle.

In some embodiments, the control module 2000 is specifically further configured to: when the temperature difference is greater than the preset temperature difference, use the current battery temperature as the target temperature that the battery is enabled to reach after the battery is heated.

In some embodiments, the control module 2000 is specifically further configured to: when the failure moment is later than the threshold moment, use the current battery temperature as the target temperature that the battery is enabled to reach after the battery is heated.

In some embodiments, the control module 2000 is specifically configured to: obtain the battery temperature at the wakeup moment; and when the battery temperature at the wakeup moment is lower than a third preset temperature threshold, heat the battery in a first mode; or when the battery temperature at the wakeup moment is greater than a third preset temperature threshold, heat the battery in a second mode, where a heating power of the battery in the first mode is greater than that in the second mode.

In some embodiments, the meteorological temperature model includes an offline preset meteorological temperature model and an online meteorological temperature model. The offline preset meteorological temperature model is established based on meteorological temperature data of a month in which an average ambient temperature is lower than a preset ambient temperature. The online meteorological temperature model is established based on meteorological temperature data predicted in a meteorological forecast.

It should be noted that the foregoing modules, namely, the determining module 1000 and the control module 2000, are configured to perform the related steps of the foregoing method. For example, the determining module 1000 is configured to perform the related content of step S 100, step S 110, step S221, step S2222, and the like; and the control module 3000 is configured to perform the related content of step S200, step S220, step S222, step S15, step S16, and the like.

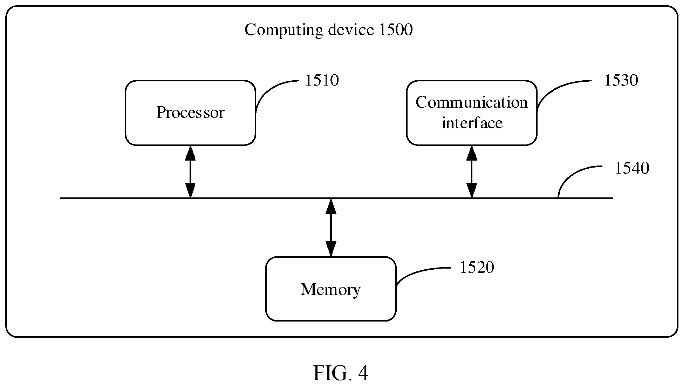

In this embodiment, the apparatus for heating a battery is presented in a module form. The "module" herein may be an application-specific integrated circuit (application-specific integrated circuit, ASIC), a processor for executing one or more software or firmware programs, a memory, an integrated logic circuit, and/or another component that may provide the foregoing function. In addition, the foregoing determining module 1000 and the foregoing control module 2000 may be implemented by using a processor 1510 of a computing device shown in FIG. 4.

**Embodiment 4**

FIG. 4 is a schematic diagram of a structure of a computing device 1500 according to an embodiment of this application. The computing device 1500 includes: a processor 1510, a memory 1520, a communication interface 1530, and a bus 1540.

It should be understood that the communication interface 1530 in the computing device 1500 shown in FIG. 4 may be configured to communicate with another device.

The processor 1510 may be connected to the memory 1520. The memory 1520 may be configured to store program code and data. Therefore, the memory 1520 may be a storage unit inside the processor 1510, an external storage unit independent of the processor 1510, or a component including a storage unit inside the processor 1510 and an external storage unit independent of the processor 1510.

Optionally, the computing device 1500 may further include the bus 1540. The memory 1520 and the communication interface 1530 may be connected to the processor 1510 by using the bus 1540. The bus 1540 may be a peripheral component interconnect (Peripheral Component Interconnect, PCI) bus, an extended industry standard architecture (Extended Industry Standard Architecture, EISA) bus, or the like. The bus 1540 may be classified into an address bus, a data bus, a control bus, and the like. For ease of representation, only one line is used to represent the bus in FIG. 4, but it does not indicate that there is only one bus or only one type of bus.

It should be understood that, in this embodiment of this application, the processor 1510 may use a central processing unit (central processing unit, CPU). The processor may alternatively be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like. Alternatively, the processor 1510 uses one or more integrated circuits to execute a related program, to implement the technical solutions provided in the embodiments of this application.

The memory 1520 may include a read-only memory and a random access memory, and provide instructions and data to the processor 1510. A part of the processor 1510 may further include a non-volatile random access memory. For example, the processor 1510 may further store information of a device type.

When the computing device 1500 runs, the processor 1510 executes a computer executable instruction in the memory 1520 to perform the operation steps of the foregoing method.

It should be understood that the computing device 1500 according to this embodiment of this application may correspond to a corresponding body for performing the method according to the embodiments of this application. In addition, the foregoing and other operations and/or functions of the modules in the computing device 1500 are separately used to implement corresponding procedures of the methods in the embodiments. For brevity, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, some of the technical solutions may be implemented in the form of a software product. The computer software product is stored in a storage medium and includes several instructions for instructing a computing device (which may be a personal computer, a server, a network device, or the like) to perform all or some of the steps of the methods described in the embodiments of this application. The storage medium includes any medium that can store program code, such as a USB flash drive, a removable hard disk, a read-only memory (Read-Only Memory, ROM), a random access memory (Random Access Memory, RAM), a magnetic disk, or a compact disc.

**Embodiment 5**

This embodiment of this application further provides a computer-readable storage medium. A computer program is stored in the computer-readable storage medium. The program is executed by a processor to perform a method for heating a battery. The method includes at least one of the solutions described in the foregoing embodiments.

The computer storage medium in this embodiment of this application may use any combination of one or more computer-readable media. The computer-readable medium may be a computer-readable signal medium or a computer-readable storage medium. The computer-readable storage medium may be but is not limited to an electric, magnetic, optical, electromagnetic, infrared, or semiconductor system, apparatus, or device, or any combination thereof. A more specific example (a non-exhaustive list) of the computer-readable storage medium includes an electrical connection having one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof. In this document, the computer-readable storage medium may be any tangible medium including or storing a program that may be used by an instruction execution system, apparatus, or device, or be used in combination with an instruction execution system, apparatus, or device.

A computer-readable signal medium may include a data signal propagated in a baseband or propagated as part of a carrier, where the data signal carries computer-readable program code. Such a propagated data signal may take a variety of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code included in the computer-readable medium may be transmitted by using any suitable medium, including but not limited to Wi-Fi, a wire, an optical cable, RF, and the like, or any suitable combination thereof.

Computer program code for performing the operations in this application may be written in one or more programming languages, or a combination thereof. The programming languages include an object-oriented programming language, such as Java, Smalltalk, and C++, and also include a conventional procedural programming language, such as a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. When a remote computer is involved, the remote computer may be connected to a user computer by using any type of network, including a local area network (LAN) or a wide area network (WAN), or may be connected to an external computer (for example, connected by using an Internet service provider through the Internet).

**Embodiment 6**

This application further provides a computer program product. When the computer program product runs on a computing device, the computing device is enabled to perform the method for heating a battery provided in the embodiment of this application.

**Embodiment 7**

This application further provides a vehicle, including the foregoing apparatus for heating a battery and a battery pack.

It should be noted that the foregoing is merely examples of embodiments and technical principles used in this application. A person skilled in the art understands that the present invention is not limited to the specific embodiments described herein, and a person skilled in the art can make various obvious changes, readjustments, and replacements without departing from the protection scope of the present invention. Therefore, although this application is described in detail by using the foregoing embodiments, the present invention is not limited to the foregoing embodiments, and more other equivalent embodiments may be included without departing from the concept of the present invention, which all fall within the protection scope of the present invention.

**Claims**

1. A method for heating a battery, comprising:

    determining, based on a battery temperature of a vehicle, an ambient temperature, and a meteorological temperature model, a wakeup moment that is before the battery temperature is lower than a first preset temperature threshold, wherein the meteorological temperature model comprises a relationship in which an ambient temperature changes with time; and
    controlling, at the wakeup moment, to heat the battery.

2. The method according to claim 1, wherein the determining, based on a battery temperature of a vehicle, an ambient temperature, and a meteorological temperature model, a wakeup moment that is before the battery temperature is lower than a first preset temperature threshold comprises:

    setting a plurality of sub-moments from a power-off moment of the vehicle;
    determining ambient temperatures at the plurality of sub-moments based on an ambient temperature at the power-off moment of the vehicle and the meteorological temperature model;
    determining battery temperatures at the plurality of sub-moments based on a battery temperature at the power-off moment of the vehicle and the ambient temperatures at the plurality of sub-moments; and
    using, as the wakeup moment, a sub-moment that is before a corresponding sub-moment used when the battery temperature is lower than the first preset temperature threshold.

3. The method according to claim 1, wherein the controlling, at the wakeup moment, to heat the battery comprises:

    when the battery temperature at the wakeup moment is lower than the first preset temperature threshold and greater than a second preset temperature threshold, determining, based on the battery temperature at the wakeup moment, the ambient temperature at the wakeup moment, and the meteorological temperature model, a target temperature that the battery is enabled to reach after the battery is heated; and
    heating the battery until the battery reaches the target temperature.

4. The method according to claim 3, wherein the determining, based on the battery temperature at the wakeup moment, the ambient temperature at the wakeup moment, and the meteorological temperature model, a target temperature that the battery is enabled to reach after the battery is heated comprises:

    determining a temperature difference between a current battery temperature and the battery temperature at the wakeup moment;
    when the temperature difference is lower than a preset temperature difference, determining, based on the current battery temperature, the ambient temperature at the wakeup moment, and the meteorological temperature model, a failure moment at which the battery temperature is lower than the second preset temperature threshold, wherein the second preset temperature threshold is lower than the first preset temperature threshold; and
    when the failure moment is earlier than a threshold moment, increasing the current battery temperature by a first temperature, wherein the threshold moment is a moment after first duration after the power-off moment of the vehicle.

5. The method according to claim 4, wherein when the temperature difference is greater than the preset temperature difference, the current battery temperature is used as the target temperature that the battery is enabled to reach after the battery is heated.

6. The method according to claim 4, wherein when the failure moment is later than the threshold moment, the current battery temperature is used as the target temperature that the battery is enabled to reach after the battery is heated.

7. The method according to claim 1, wherein the controlling, at the wakeup moment, to heat the battery comprises:

obtaining the battery temperature at the wakeup moment; and
when the battery temperature at the wakeup moment is lower than a third preset temperature threshold, heating the battery in a first mode; or
when the battery temperature at the wakeup moment is greater than the third preset temperature threshold, heating the battery in a second mode, wherein a heating power of the battery in the first mode is greater than that in the second mode.

8. The method according to any one of claims 1 to 7, wherein the meteorological temperature model comprises an offline preset meteorological temperature model and an online meteorological temperature model, wherein

the offline preset meteorological temperature model is established based on meteorological temperature data of a month in which an average ambient temperature is lower than a preset ambient temperature; and
the online meteorological temperature model is established based on meteorological temperature data predicted in a meteorological forecast.

9. An apparatus for heating a battery, comprising:

a determining module, configured to determine, based on a battery temperature of a vehicle, an ambient temperature, and a meteorological temperature model, a wakeup moment that is before the battery temperature is lower than a first preset temperature threshold, wherein the meteorological temperature model describes a relationship in which an ambient temperature changes with time; and
a control module, configured to control, at the wakeup moment, to heat the battery.

10. The apparatus according to claim 9, wherein the determining module is specifically configured to:

set a plurality of sub-moments from a power-off moment of the vehicle;
determine ambient temperatures at the plurality of sub-moments based on an ambient temperature at the power-off moment of the vehicle and the meteorological temperature model;
determine battery temperatures at the plurality of sub-moments based on a battery temperature at the power-off moment of the vehicle and the ambient temperatures at the plurality of sub-moments; and
use, as the wakeup moment, a sub-moment that is before a corresponding sub-moment used when the battery temperature is lower than the first preset temperature threshold.

11. The apparatus according to claim 9, wherein the control module is specifically configured to:

when the battery temperature at the wakeup moment is lower than the first preset temperature threshold and greater than a second preset temperature threshold, determine, based on the battery temperature at the wakeup moment, the ambient temperature at the wakeup moment, and the meteorological temperature model, a target temperature that the battery is enabled to reach after the battery is heated; and
heat the battery until the battery reaches the target temperature.

12. The apparatus according to claim 11, wherein the control module is specifically configured to:

determine a temperature difference between a current battery temperature and the battery temperature at the wakeup moment;
when the temperature difference is lower than a preset temperature difference, determine, based on the current battery temperature, a current ambient temperature, and the meteorological temperature model, a failure moment at which the battery temperature is lower than the second preset temperature threshold, wherein the second preset temperature threshold is lower than the first preset temperature threshold; and
when the failure moment is earlier than a threshold moment, increase the current battery temperature by a first temperature, wherein the threshold moment is a moment after first duration after the power-off moment of the vehicle.

13. The apparatus according to claim 12, wherein the control module is specifically further configured to: when the temperature difference is greater than the preset temperature difference, use the current battery temperature as the target temperature that the battery is enabled to reach after the battery is heated.

14. The apparatus according to claim 12, wherein the control module is specifically further configured to: when the failure moment is later than the threshold moment, use the current battery temperature as the target temperature that the battery is enabled to reach after the battery is heated.

15. The apparatus according to claim 9, wherein the control module is specifically configured to:

obtain the battery temperature at the wakeup moment; and
when the battery temperature at the wakeup moment is lower than a third preset temperature threshold, heat the battery in a first mode; or
when the battery temperature at the wakeup moment is greater than a third preset temperature threshold, heat the battery in a second mode, wherein a heating power of the battery in the first mode is greater than that in the second mode.

16. The apparatus according to any one of claims 9 to 15, wherein the meteorological temperature model comprises an offline preset meteorological temperature model and an online meteorological temperature model, wherein

the offline preset meteorological temperature model is established based on meteorological temperature data of a month in which an average ambient temperature is lower than a preset ambient temperature; and
the online meteorological temperature model is established based on meteorological temperature data predicted in a meteorological forecast.

17. An electronic device, comprising a memory and a processor, wherein executable code is stored in the memory, and the processor executes the executable code to implement the method for heating a battery according to any one of claims 1 to 8.

18. A computer-readable storage medium, wherein program instructions are stored in the computer-readable storage medium, and when the program instructions are executed by a computer, the computer is enabled to perform the method for heating a battery according to any one of claims 1 to 8.

19. A computer program product, wherein when the computer program product runs on a computing device, the computing device is enabled to perform the method for heating a battery according to any one of claims 1 to 8.

20. A vehicle, comprising the apparatus for heating a battery according to any one of claims 9 to 16 and a battery pack.

Determine, based on a battery temperature of a vehicle, an ambient temperature, and a meteorological temperature model, a wakeup moment that is before the battery temperature is lower than a first preset temperature threshold

S100

Control, at the wakeup moment, to heat a battery

S200

FIG. 1a

Set a plurality of sub-moments from a power-off moment of the vehicle; and determine ambient temperatures at the plurality of sub-moments based on an ambient temperature used when the vehicle is powered off and the meteorological temperature model

S110

Determine battery temperatures at the plurality of sub-moments based on a battery temperature used when the vehicle is powered off and the ambient temperatures at the plurality of sub-moments

S120

Use, as the wakeup moment, a sub-moment that is before a corresponding sub-moment used when the battery temperature is lower than the first preset temperature threshold

S130

FIG. 1b

S210

Obtain the battery temperature at the wakeup moment

S220

Heat the battery when the battery temperature at the wakeup moment is lower than the first preset temperature threshold and greater than the second preset temperature threshold

FIG. 1c

Determine, based on the ambient temperature at the wakeup moment, the battery temperature at the wakeup moment, and the meteorological temperature model, a target temperature that the battery is enabled to reach after the battery is heated

S221

Heat the battery until the battery reaches the target temperature

S222

FIG. 1d

FIG. 1e

Obtain the battery temperature at the wakeup moment

S201

When the battery temperature at the wakeup moment is lower than a third preset temperature threshold, heat the battery in a first mode; or when the battery temperature at the wakeup moment is greater than a third preset temperature threshold, heat the battery in a second mode

S202

FIG. 1f

```
                                                              S1
┌────────────────────────────────────────────┐    ╱
│  Obtain a battery temperature used when a    │  ╱
│  vehicle is powered off and an ambient       │
│  temperature used when the vehicle is        │
│  powered off                                 │
└────────────────────────────────────────────┘
                      │                             S2
                      ▼                       ╱
┌────────────────────────────────────────────┐  ╱
│  Determine, based on a meteorological        │
│  temperature model, a lowest ambient         │
│  temperature earlier than a threshold moment │
└────────────────────────────────────────────┘
                      │                             S3
                      ▼                       ╱
┌────────────────────────────────────────────┐  ╱
│  The lowest ambient temperature is greater   │
│  than a preset lowest ambient temperature    │
└────────────────────────────────────────────┘
                   No │
                      ▼                             S4
┌────────────────────────────────────────────┐  ╱
│  Determine, based on the battery temperature │╱
│  used when the vehicle is powered off, the   │
│  ambient temperature used when the vehicle   │
│  is powered off, and the meteorological      │
│  temperature model, a wakeup moment at       │
│  which the battery temperature is lower than │
│  a first preset temperature threshold and    │
│  that is earlier than a threshold moment     │
└────────────────────────────────────────────┘
                      │                             S5
                      ▼                       ╱
┌────────────────────────────────────────────┐  ╱
│  The wakeup moment is earlier than the       │
│  threshold moment                            │
└────────────────────────────────────────────┘
                  Yes │                             S6
                      ▼                       ╱
┌────────────────────────────────────────────┐  ╱
│  Wake up the vehicle at the wakeup moment    │
└────────────────────────────────────────────┘
                      │                             S7
                      ▼                       ╱
┌────────────────────────────────────────────┐  ╱
│  Obtain the battery temperature at the       │
│  wakeup moment and the ambient temperature   │
│  at the wakeup moment                        │
└────────────────────────────────────────────┘
                      │                             S8
                      ▼                       ╱
┌────────────────────────────────────────────┐  ╱
│  The battery temperature at the wakeup       │
│  moment is lower than a second preset        │
│  temperature threshold                       │
└────────────────────────────────────────────┘
                   No │
                      ▼
```

TO                        TO                        TO
FIG. 2a-2                 FIG. 2a-2                 FIG. 2a-2

FIG. 2a-1

CONT.
FROM
FIG. 2a-1

CONT.
FROM
FIG. 2a-1

CONT.
FROM
FIG. 2a-1

S9

The battery temperature at the wakeup moment is lower than the first preset temperature threshold

Yes

S10

Increase the battery temperature by a first temperature as a target temperature

S11

Determine a temperature difference between the target temperature and the battery temperature at the wakeup moment

S12

The temperature difference is greater than a preset temperature difference

Yes

No

No

Determine, based on the target temperature, the ambient temperature at the wakeup moment, and the meteorological temperature model, a failure moment at which the battery temperature is lower than the second preset temperature threshold

S13

Yes

S14

The failure moment is earlier than the threshold moment

Yes

Yes

No

Heat the battery to the target temperature

S15

Power off the vehicle

S16

End

FIG. 2a-2

S4.1

Divide duration from a power-off moment of a vehicle to a threshold moment into a plurality of sub-moments

S4.2

Determine ambient temperatures at the plurality of sub-moments based on an ambient temperature used when the vehicle is powered off and a meteorological temperature model

S4.3

Determine battery temperatures at the plurality of sub-moments based on a battery temperature used when the vehicle is powered off and the ambient temperatures at the plurality of sub-moments

S4.4

Use, as a wakeup moment, a sub-moment before a corresponding sub-moment used when the battery temperature is less than a first preset temperature threshold

FIG. 2b

Determining module 1000

Control module 2000

FIG. 3

Computing device 1500

Processor — 1510

Communication interface — 1530

— 1540

Memory — 1520

FIG. 4

FIG. 5

EP 4 343 925 A1

FIG. 6

FIG. 7

FIG. 8

## INTERNATIONAL SEARCH REPORT

| International application No. |
| --- |
| **PCT/CN2021/101952** |

**A. CLASSIFICATION OF SUBJECT MATTER**

H01M 10/615(2014.01)i; H01M 10/625(2014.01)i; H01M 10/633(2014.01)i; H01M 10/635(2014.01)i; H01M 10/48(2006.01)i; B60L 58/24(2019.01)i; B60L 58/27(2019.01)i

According to International Patent Classification (IPC) or to both national classification and IPC

**B. FIELDS SEARCHED**

Minimum documentation searched (classification system followed by classification symbols)

H01M,B60L

Documentation searched other than minimum documentation to the extent that such documents are included in the fields searched

Electronic data base consulted during the international search (name of data base and, where practicable, search terms used)

WPABSC; CNTXT; WPABS; ENTXT; CJFD; CNKI; ENTXTC; VEN: 环境, 气候, 电池, 温度模型, 加热, 唤醒, 启动, 起动, 开始, ambient, environment, climate, weather, situation, clime, cell, battery, thermal 2w model, temperature w model, heat+, warm+, awaken, rouse, wake w up, arouse, initiate, enabl+, commission+, start, boot, activate

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2016207383 A (TOYOTA MOTOR CORP) 08 December 2016 (2016-12-08) description, paragraphs 9-76 and figures 1-7 | 1, 2, 7-10, 15-20 |
| Y | US 2018080995 A1 (FARADAY & FUTURE INC.) 22 March 2018 (2018-03-22) description, paragraphs 17-37 and figure 1 | 1, 2, 7-10, 15-20 |
| Y | WO 2014005470 A1 (SHENZHEN BYD AUTO R&D COMPANY LIMITED et al.) 09 January 2014 (2014-01-09) description page 7 lines 4-26 | 7, 8, 15-20 |
| A | WO 2014122690 A1 (INSTITUTE OF SEMICONDUCTORS, CHINESE ACADEMY OF SCIENCES) 14 August 2014 (2014-08-14) entire document | 1-20 |
| A | DE 102005040143 A1 (DAIMLERCHRYSLER AG) 01 March 2007 (2007-03-01) entire document | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 January 2022** | **09 February 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/101952**

| Patent document cited in search report | | | Publication date (day/month/year) | Patent family member(s) | | | Publication date (day/month/year) |
|---|---|---|---|---|---|---|---|
| JP | 2016207383 | A | 08 December 2016 | None | | | |
| US | 2018080995 | A1 | 22 March 2018 | None | | | |
| WO | 2014005470 | A1 | 09 January 2014 | CN | 103419666 | A | 04 December 2013 |
| | | | | CN | 103419666 | B | 02 March 2016 |
| WO | 2014122690 | A1 | 14 August 2014 | None | | | |
| DE | 102005040143 | A1 | 01 March 2007 | None | | | |